# EUROPEAN PATENT APPLICATION

(11) **EP 4 597 367 A1**
(43) Date of publication of application: **06.08.2025**
(21) Application number: 25152282.7
(22) Date of filing: 16.01.2025
(51) Int. Cl.: G06N 3/045, G06N 3/084, H04N 19/59, H04N 19/80

(54) **GENERATING AN IMPLICIT NEURAL REPRESENTATION**

(30) Priority: 05.02.2024 GB 202401472
(71) Applicant: Sony Interactive Entertainment Europe Limited, London W1F 7LP (GB)
(72) Inventor: BIGOS, Andrew James, c/o Sony Interactive Entertainment Europe Limited, London, W1F 7LP (GB)
(74) Representative: Fish & Richardson P.C.

(57) **Abstract**

A method of training an implicit neural representation (INR) on an input digital data signal comprises the steps of obtaining a set of at least two ground-truth signals derived from the input signal, each ground-truth signal being a different size of the input signal, and creating an estimate INR. training the estimate INR comprises training an estimate INR using the smallest ground-truth signal in the set, and for each of a subset of the remaining ground-truth signals in the set, from the smallest to the largest in the subset, recursively refining the immediately previous estimate INR. This comprises training a first residual INR on a comparison of the previous estimate INR and the ground-truth signal, and combining the first residual INR and previous estimate INR.

## Description

### Field

The invention relates to a method and system for generating an implicit neural representation by training it on a digital signal.

### Background

A digital signal such as a two-dimensional image, three-dimensional shape, video or audio recording is a discrete representation of a continuous signal. For example a two-dimensional digital image is generally stored as a grid of pixels, and a video recording is a sequence of such images, each having a timestamp. A three-dimensional shape may be represented as a point cloud, and an audio recording is a series of amplitude samples.

It is possible to fit a continuous function to a digital signal, which maps the domain of the signal to data. For example, for a two-dimensional image, the function would map coordinates to pixel values. Being continuous, the function would be resolution-agnostic, meaning that any co-ordinates could be input to calculate a pixel value, even if those co-ordinates did not appear in the original digital signal.

Such a function can be estimated by a neural network by training on discretely represented samples of the same signal, and the trained model is referred to as an implicit neural representation (INR) of the signal. INRs have many uses, including compression, scaling of images to above their original resolution, and generating three-dimensional scenes from two-dimensional images.

However, training an INR often requires a disproportionately large number of parameters compared to the signal dimension, leading to a large memory footprint a long training times, with the problem becoming intractable for large or high-dimensional signals. Known methods of overcoming this include splitting each sample of a signal into a number of smaller tiles and training separate INRs on each tile, and using multiple resolutions to represent different levels of detail. However, such known methods result in image artefacts, for example when neighbouring tiles are trained at different resolutions.

### Summary of the Invention

Throughout this specification the word "comprise", or variations such as "includes", "comprises", or "comprising", will be understood to imply the inclusion of a stated element, integer, step, or group of elements, integers, or steps, but not the exclusion of any other element, integer, step, or group of elements, integers, or steps.

In a first aspect, the present disclosure provides a method of training an implicit neural representation (INR) on an input digital data signal according to claim 1. Optional features of the first aspect are set out in the dependent claims.

In a second aspect, the present disclosure provides data processing apparatus comprising a processor and a memory storing instructions that, when executed by the processor, cause the processor to perform the method of the first aspect.

In a third aspect, the present disclosure provides a computer program comprising instructions which, when the program is executed by a computer, cause the computer to carry the method of the first aspect.

In a fourth aspect, the present disclosure provides a computer-readable storage medium having stored thereon the computer program of the second aspect.

It will be appreciated that any features described herein as being suitable for incorporation into one or more aspects or embodiments of the present disclosure are intended to be generalisable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### Summary of the Figures

Embodiments of the present disclosure will now be described with reference to the accompanying drawings, where:
Figure 1 shows an exemplary environment in which the disclosure may be carried out;
Figure 2 is a simplified illustrative diagram of a computer system shown in Figure 1;
Figure 3 shows steps to carry out a program to create INRs shown in Figure 2;
Figure 4 is an illustrative diagram of a process to create an INR carried out by the program shown in Figure 3;
Figure 5 details steps carried out in Figure 3 to create an INR;
Figure 6 is an illustrative diagram of steps taken to obtain a first estimate model;
Figure 7 details steps carried out in Figure 5 to obtain a first estimate model;
Figure 8 details steps carried out in Figure 5 to refine an estimate model;
Figure 9 is an illustrative diagram of steps taken to obtain a first refined estimate;
Figure 10 details steps carried out in Figure 8 to obtain a first refined estimate;
Figure 11 is an illustrative diagram of steps taken to obtain a second refined estimate; and
Figure 12 details steps carried out in Figure 8 to obtain a second refined estimate.

### Detailed Description

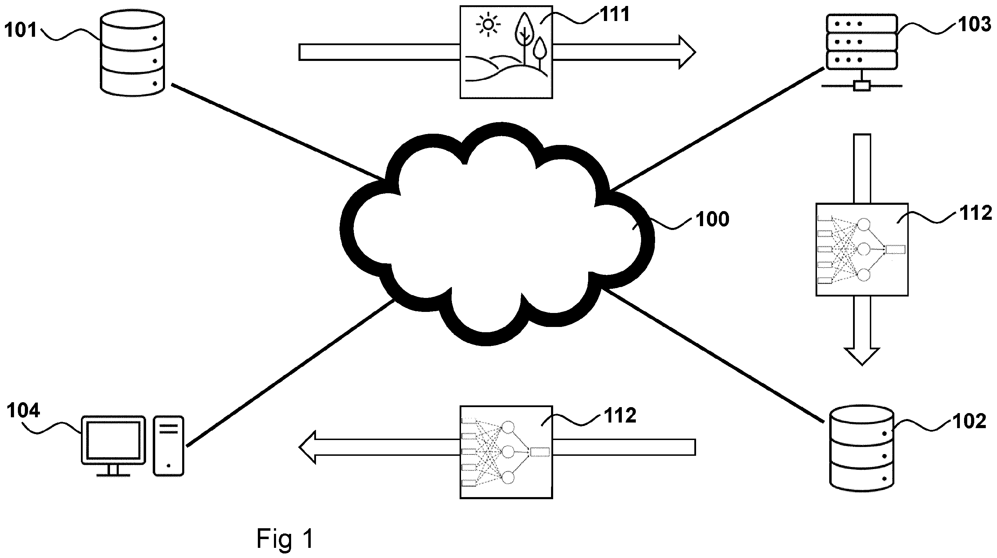

Figure 1 is a diagrammatic view of an environment in which the invention may be embodied. A first datastore 101, a second datastore 102, a first computer system 103 and a second computer system 104 are all connected to the internet 100. In other embodiments entities 101 to 104 may be physically located together, form part of a larger computer system, or be connected by a different network. The connections shown may be wired or wireless, of any suitable type.

First datastore 101 provides storage for images, and second datastore 102 provides storage for neural representations of images. Each of datastores 101 and 102 may be a single physical storage medium, distributed storage on a single site, cloud storage, or any other suitable computer-implemented storage. Each may include a server for servicing request from clients, or a separate server may be provided, or it may communicate with clients using another method or system. Both datastores are shown in Figure 1 as connected to the internet 100, but they could be physically located together or connected via another network.

Computer system 103 runs software that obtains an image, such as image 111, from first datastore 101, trains an implicit neural representation (INR) 112 on it, and stores the INR in datastore 102. It may be a single computer system, a distributed computer system, a cloud computer system, or any other suitable computer system. It is shown in Figure 1 as connected to datastores 101 and 102 via the internet 101, but may be physically located with one or both of them or connected by another means.

Client computer system 104 runs software that obtains an INR, such as INR 112, from second datastore 102 and uses the INR to generate an image, either for display or for storage. It may be a single computer system, a distributed computer system, a cloud computer system, or any other suitable computer system. It is shown in Figure 1 as connected to datastores 101 and 102 via the internet 101, but may be physically located with one or both of them or connected by another means.

The present disclosure is described with reference to INRs of images, but the invention is relevant to INRs trained on any kind of digital data signal representing a continuous signal. The digital, discrete data signal may be a two-dimensional image, three-dimensional shape, audio file, video file, audio-visual file, and so on.

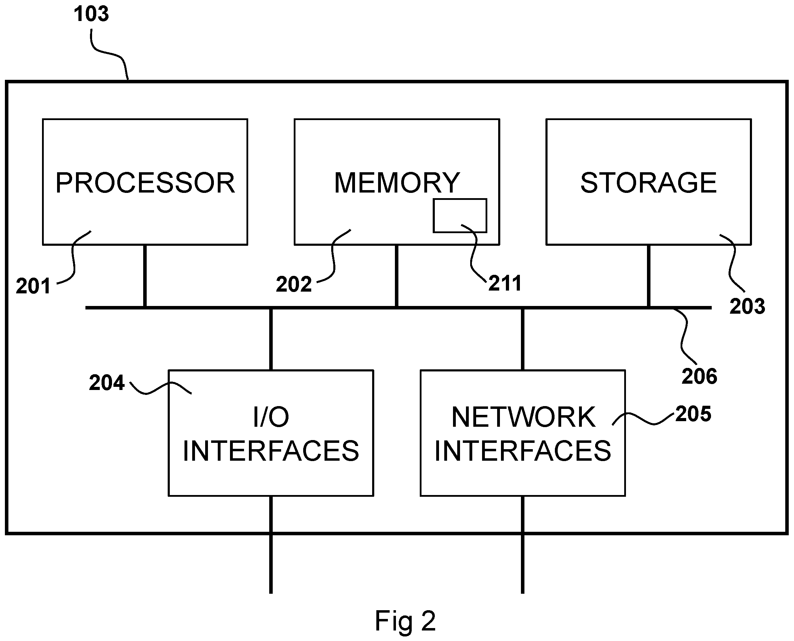

Figure 2 is a simplified diagram of computer system 103. It includes a processor 201, which may include one or more processing units such as CPU's, memory 202 such as RAM memory, and local storage 203 such as one or more disk drives. Input/output interfaces 304 provide service and functionality for attached devices, such as user input devices, a display, external storage, or any other required devices. Network interface 205 provides a connection to the internet 100 or to any other network. The components 201 to 205 are connected by a bus 206. The diagram shown in Figure 2 is merely an example of a computer system. Computer system 103 may be, as previously discussed, any kind of computer system.

When computer system 103 is running, memory 202 holds instructions for a number of software programs, such as an operating system, software for creating, training and running neural networks, software for communicating with other systems in a network, and so on. Such software will not be described herein and any suitable programs can be used. Memory 202 also holds instructions for a program 211 to create implicit neural representations from input images.

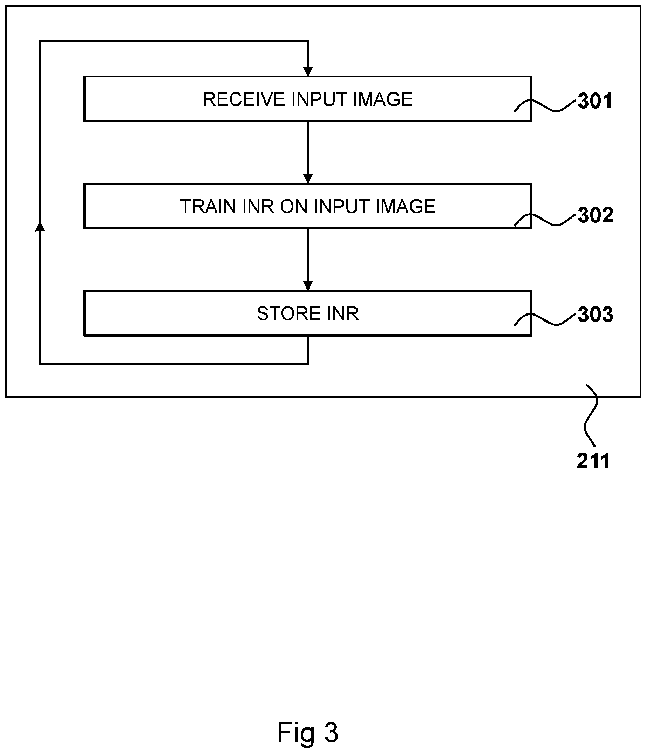

The basic steps of program 211, carried out by processor 201 when running the program, are shown in Figure 3. Instructions for program 211 are loaded into memory 202 from storage 203, after having been copied to storage 203 from a computer-readable medium connected via I/O interfaces 104, or from a networked location via network interface 205, and carried out by processor 201. Program 211 may be any type of suitable software, and may be suitable for being carried out on a single CPU, a processor chip comprising multiple CPUs, a distributed processor either in a physical location or in a cloud computing environment, or any other suitable processor.

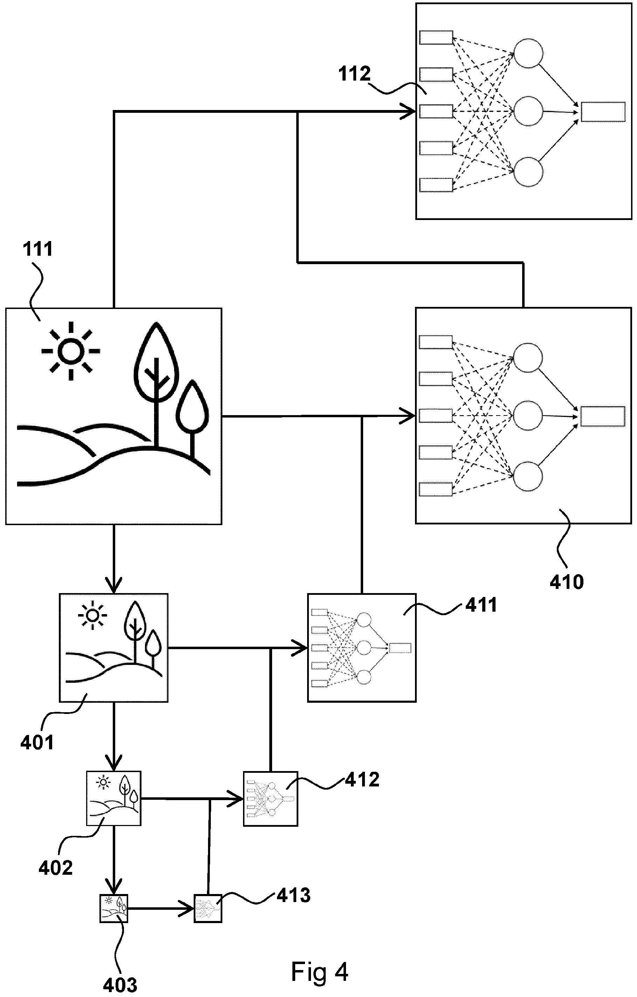

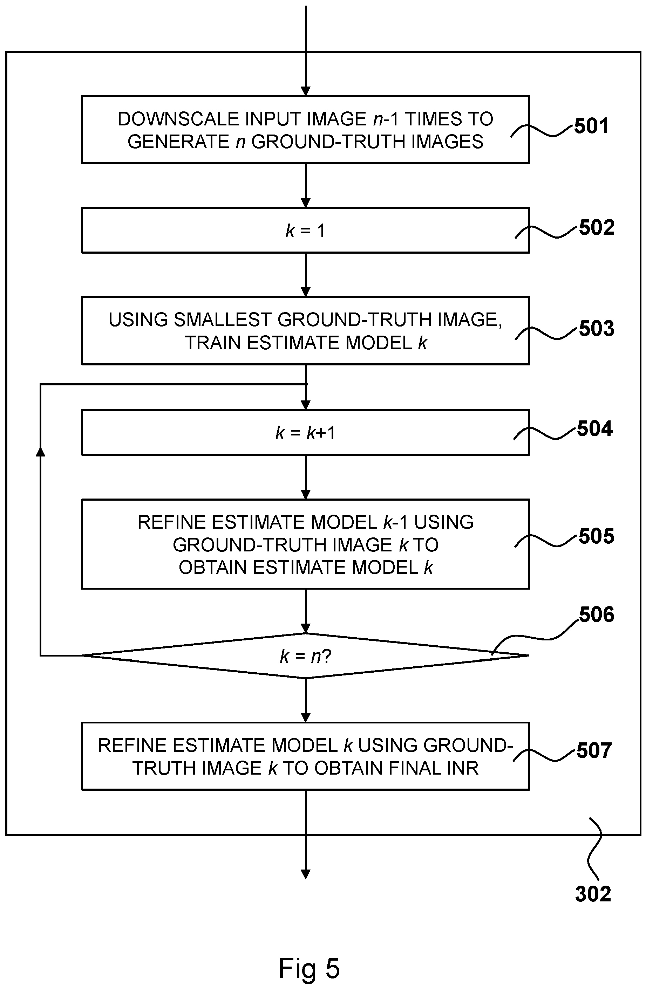

At step 301 an input image 111 is obtained, for example by retrieving it from first datastore 101 or retrieving it from local or external storage. At step 302 an INR 112 is trained on input image 111, as will be illustrated in Figure 4 and further described with reference to Figure 5. At step 303 the INR 112 is stored, for example by sending it to second datastore 102 or storing it in local or external storage.

In known methods of training an INR on an image, a neural network model is trained on discretely represented samples of the image. In the disclosure described herein, the network is not trained on all the samples of the image, but on differences between the samples and models obtained at different stages of the process, as illustrated in the example of Figure 4.

First, a number of ground-truth images of different sizes are obtained. In this description, the term ground-truth image refers to the input image downscaled to different sizes, potentially including the input image itself. In the example of Figure 4, each downscaled image is a quarter of the size of the previous image. A depth of four is shown, ie the input image is downscaled three times to generate ground-truth images 401, 402 and 403. In this example, input image 111, being the largest ground-truth image, has a size of 1024 x 1024 pixels, so that the next largest ground-truth image 401 has 512 x 512 pixels, the next largest ground-truth image 402 has 256 x 256 pixels, and the smallest ground-truth image 403 has 128 x 128 pixels. However the process is applicable to an input image of any size, any number of downscaled images, and any ratio of downscaling. The input image itself need not be included as one of the ground-truth images, although not including it may result in a less accurate final model.

A first estimate model 413 is created by training a neural network model using smallest ground-truth image 403. An image inferred from first estimate model 413 is compared with the next-smallest ground-truth image 402, and the differences between the two images are used to refine estimate model 413 to create a next estimate model 412. Similarly, estimate model 412 and next-smallest ground-truth image 401 are used to create a next estimate model 411, and finally estimate model 411 and the largest ground-truth image, which is input image 111, are used to create a final estimate model 410. Final estimate model 410 undergoes a final refinement process using largest ground-truth image 111 to obtain final INR 112. This process can be scaled to accommodate any number of ground-truth images. Further, the process may be stopped at any point before all the ground-truth images have been considered, if the estimate model has been sufficiently refined.

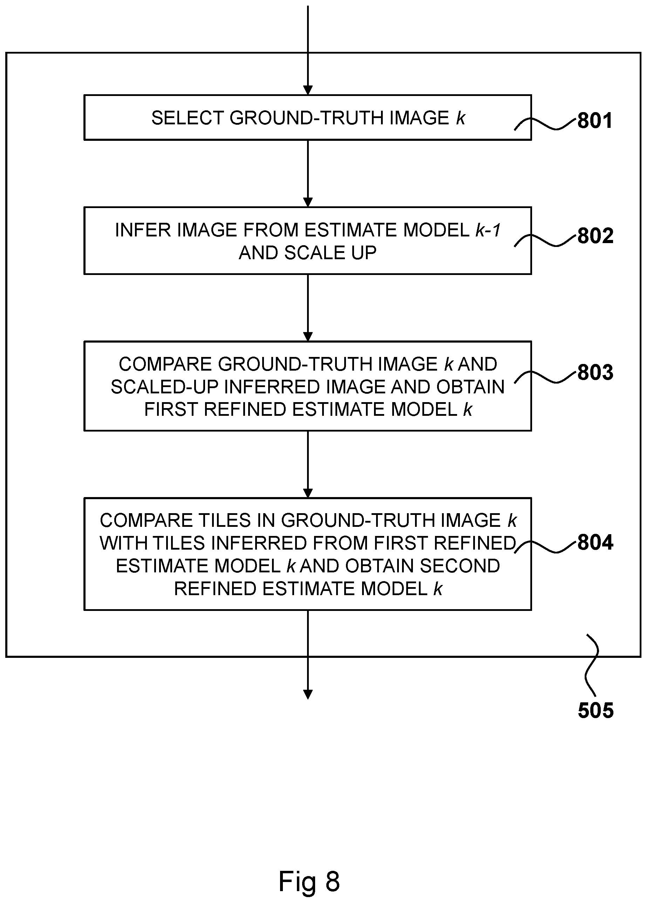

In the diagram of Figure 4 and other figures, the successively-refined estimate models are shown as increasing in size. This is to indicate that earlier models are combined with residual models, as will be described with reference to Figure 8, to refine the model at each stage. However, an INR is resolution-agnostic, meaning that it can be used to output a digital signal of any size, regardless of the size of the signal on which it was trained. No correlation should therefore be drawn between the size of each ground-truth image in this Figure and the refined estimate model it was used to create.

Therefore there is provided a method of training an INR, such as INR 112, on an input digital data signal, such as input image 111. The method comprises the steps of obtaining a set of at least two ground-truth signals derived from the input signal, such as ground-truth images 111, 401, 402 and 403, each ground-truth signal being a different size of the input signal, and potentially including the input signal. An estimate INR, such as INR 112, is trained by training an estimate INR, such as estimate model 413, on the smallest ground-truth signal in the set, such as image 403. For each of a subset of the remaining ground-truth signals in the set, from the smallest to the largest in the subset, the immediately previous estimate INR is recursively refined.

Figure 5 details steps carried out by processor 201 at step 302 to train an INR, implementing the process illustrated in Figure 4 for any number of ground-truth images. At step 501, the input image 111 is downscaled *n* - 1 times to generate *n* ground-truth images, numbered from 1 (smallest downscaled image) to *n* (input image), each a different resizing of input image 111. Alternatively, input image 111 may be downscaled *n* times to generate *n* ground-truth images if the input image itself is not to be included. Other methods than downscaling may be used to generate the ground-truth images. The value of *n* may be chosen automatically dependent on the size of the input image or another parameter, or may be a user-controlled variable.

The downscaling may be done by any suitable algorithm or method. The relative sizes of the downscaled images may be consistent with each other, or each downscaling may be by a different amount.

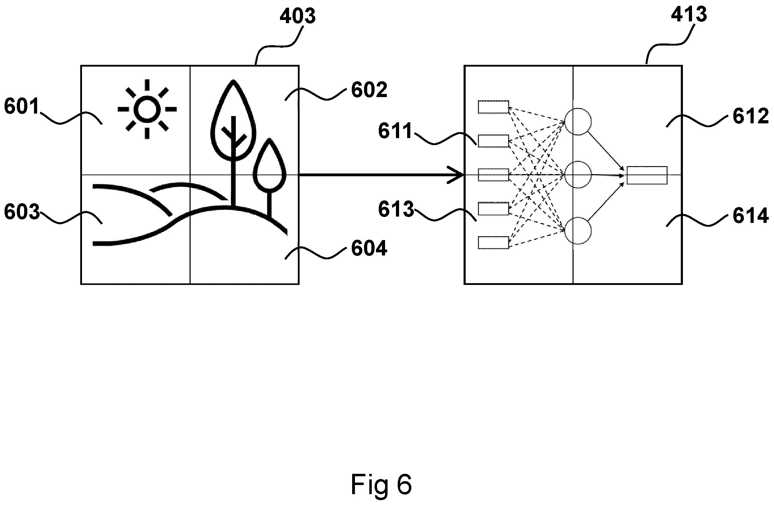

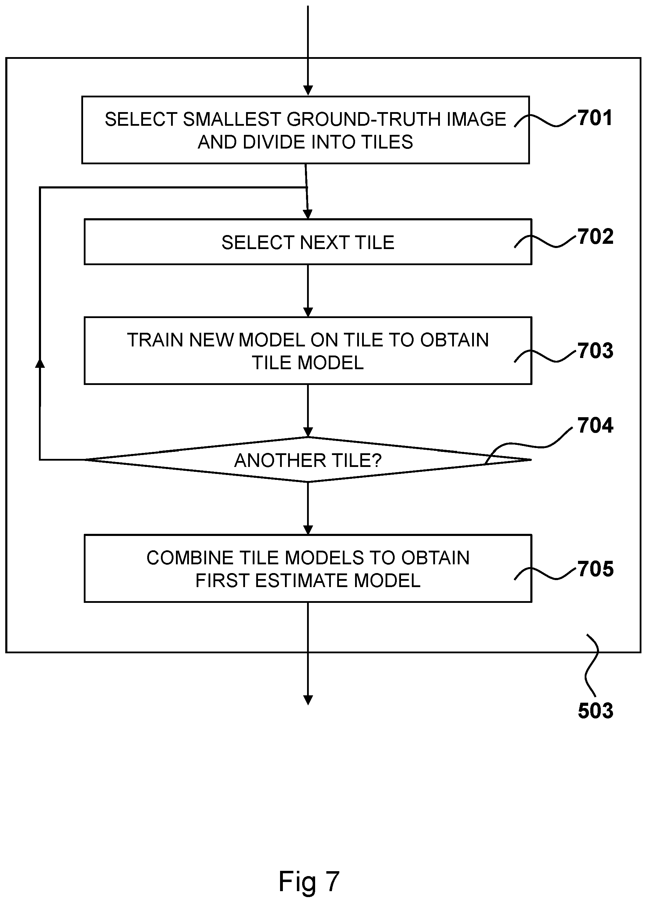

At step 502 a variable *k* is set to 1. At step 502 the smallest ground-truth image is used to train the first estimate model, *k* = 1, as will be illustrated in Figure 6 and further described with reference to Figure 7. The value of *k* is then incremented by 1 at step 504.

At step 505 estimate model *k* - 1, which on the first iteration is estimate model 1, is refined using ground-truth image *k* to obtain a new estimate model *k,* as will be described further with reference to Figure 8. At step 506 a question is asked as to whether the current value of *k* is equal to *n.* If this question is answered in the negative, then control is returned to step 504, so that *k* is incremented and the next-largest ground-truth image *k* is used to further refine the estimate model. If the question is answered in the affirmative then the last ground-truth image used was the largest (usually the input image). At step 507 estimate model *k* = *n* is refined one last time using the last ground-truth image, to obtain the final INR for output to storage.

Alternatively, the process can be ended before the question asked at step 506 is answered in the affirmative, if it is determined that estimate model *k* is sufficiently accurate, in which case the final refinement may or may not be carried out.

The process of training the first estimate model on the smallest ground-truth image is illustrated in Figure 6, continuing the example of Figure 4. Smallest ground-truth image 403 is split into a number of tiles, in this example four equal-sized tiles 601, 602, 603 and 604. Each tile is used to train a new neural network. These corresponding tile models 611, 612, 613 and 614 are combined to create first estimate model 413. This estimate model is then recursively refined by comparisons with the rest of the ground-truth images to create the final INR.

Figure 7 details steps carried out by processor 201 at step 503 to obtain the first estimate model, implementing the process shown in Figure 6. At step 701 ground-truth image *k,* which is the smallest ground-truth image since at this point *k* is equal to 1, is selected and split into a number of tiles. The number or size of tiles may be chosen automatically dependent on the size of the input image or another parameter, or may be a user-controlled variable.

At step 702 a tile is selected, and at step 703 a new multi-layer perceptron neural network, or other suitable neural network, is trained on the tile. The neural network may be any suitable network; a neural network with the characteristic that it can fit sparse images efficiently is preferred. A typical neural network representing a two- or three-dimensional image will have as input of the location of a pixel in the image and will output the colour of that pixel, for example in RGB colour space. Other inputs and outputs would be appropriate for the type of digital signal being represented. The typical network might have three hidden layers of 256 neurons each; however, this would depend on the size of the digital signal being encoded.

At step 704 a question is asked as to whether there is another tile in the image, and if this question is answered in the affirmative then control is returned to step 702 and the next tile is selected.

If the question is answered in the affirmative then all the tile models have been created, and they are combined at step 706 to obtain estimate model *k* = 1, which is an estimate of the smallest ground-truth image, and consists of a map of the tiles plus the weights of the tile models. Combining tile models, in this step and throughout this description, means that the models will be inferred consecutively, with the output of one model being used as the input for the next. However, for this first tiling step, the models may be run separately or simultaneously, since each pixel is only input into one tile model.

Thus in this embodiment the process of training an estimate INR, such as first estimate model 413, using the smallest ground-truth signal, such as ground-truth image 403, comprises splitting the ground-truth signal into a plurality of tiles, such as tiles 601 to 604, training a neural network on each of the tiles to train a plurality of tile INRs, such as tile models 611 to 614, and combining the plurality of tile INRs.

In other embodiments other methods of training the first estimate INR could be used. For example, if the digital signal is part of a sequence of images such as a video made up of image frames, then the first estimate of a frame could be the previous frame.

Figure 8 details steps carried out by processor 201 at step 505, after k has been incremented, to refine the previous estimate model *k* -1 to obtain a new estimate model *k.* On the first iteration of this step estimate model 1 will be refined to obtain estimate model 2, and so on until estimate model *n* - 1 is refined to obtain estimate model *n*.

At step 801 the next-largest ground-truth image, image *k,* is selected. At step 802 an image is inferred from the previous estimate model, estimate model *k* - 1, and scaled up to the same size as ground-truth image *k* using bi-linear interpolation or any other suitable method. Alternatively the scaled-up image may be inferred from estimate model *k* - 1 by inputting additional pixels to generate a larger size. A different method may be used every time step 802 is run, depending on what gives the best results.

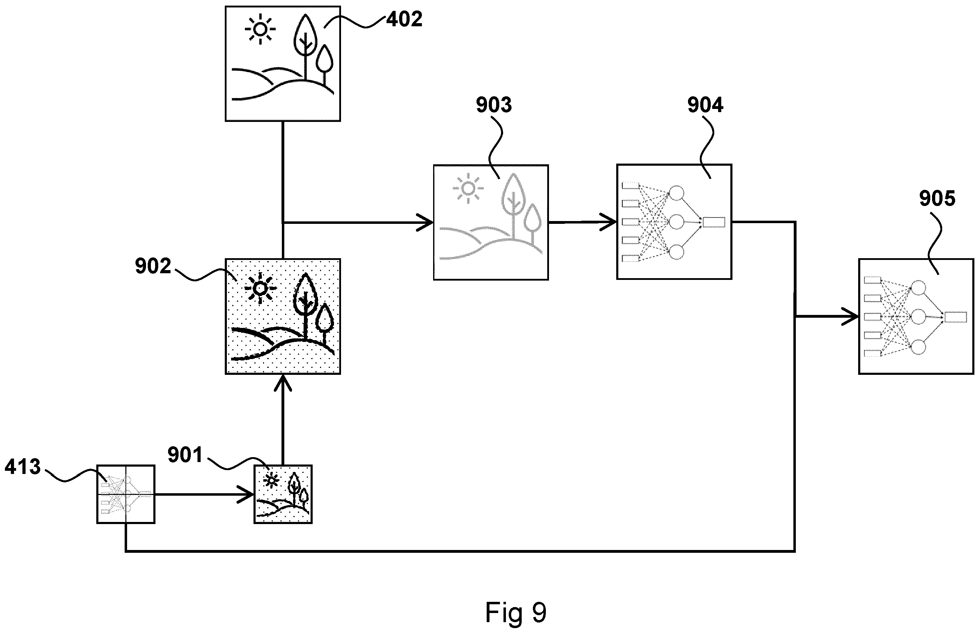

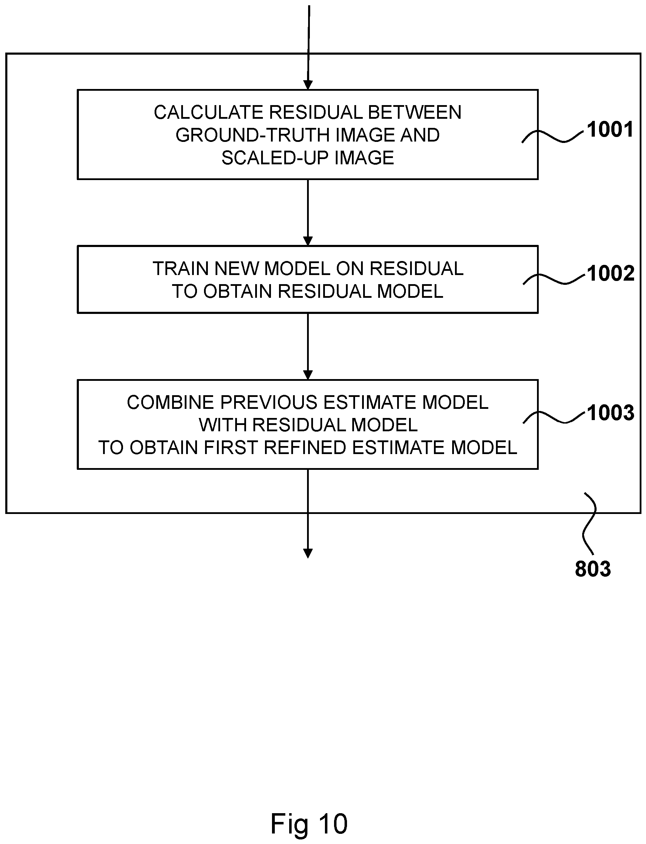

At step 803 the scaled-up image is compared with ground-truth image *k* so that a first refined estimate model *k* is obtained, as will be illustrated in Figure 9 and further described with reference to Figure 10.

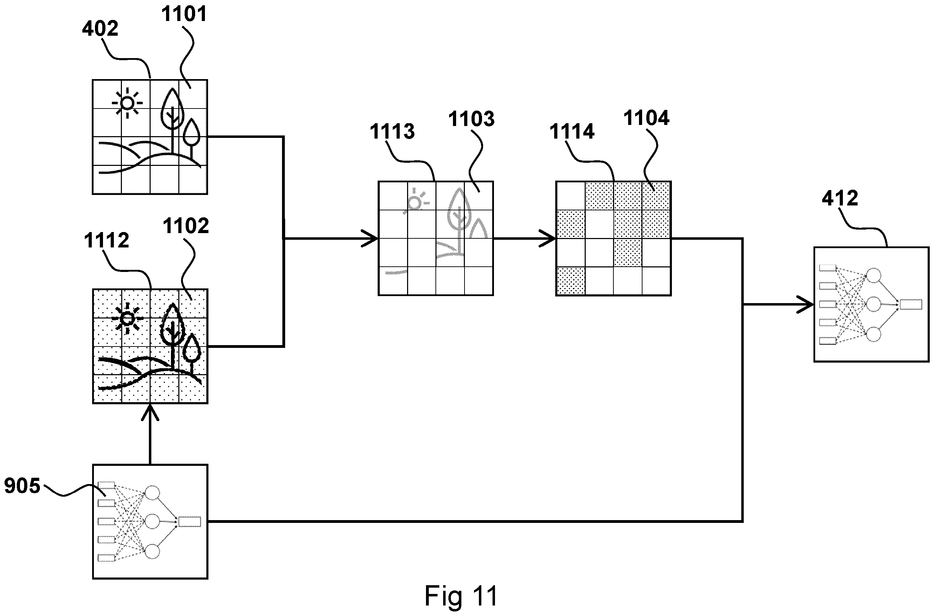

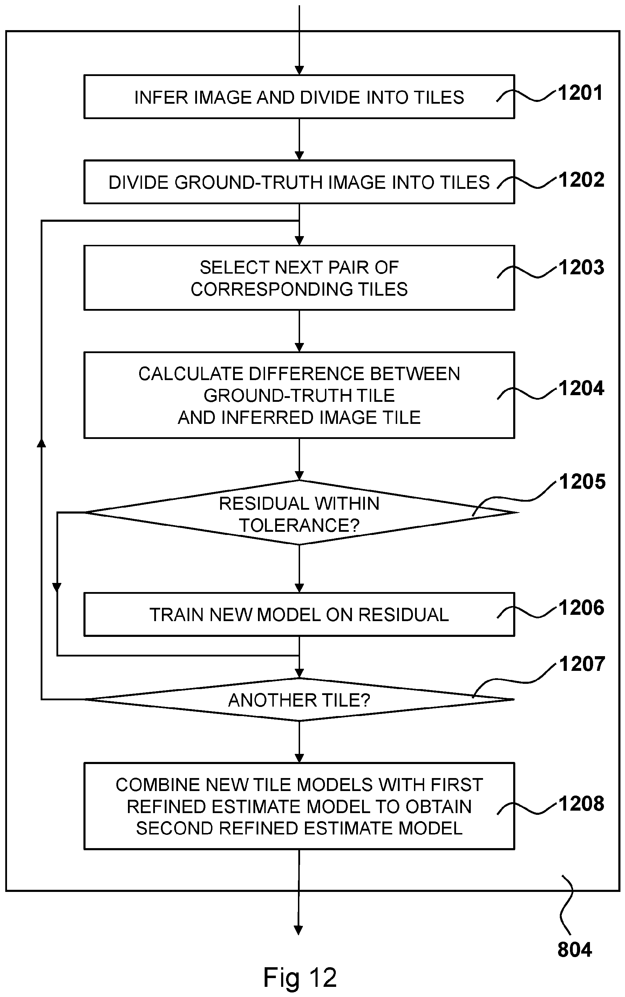

At step 804 tiles in ground-truth image *k* are compared with tiles inferred from first refined estimate model *k* so that a second refined estimate model *k* is obtained, as will be illustrated in Figure 11 and further described with reference to Figure 12. In this embodiment, this second refined estimate model is then used as the estimate model for the next iteration of step 504.

The process of obtaining the first refined estimate model is illustrated in Figure 9, continuing the example of Figures 4 and 6. This is carried out using the previous estimate model and the next-largest ground-truth image, i.e. estimate model *k* - 1 and ground-truth image *k.* On the first iteration of this process, which is shown in Figure 9, these are estimate model 413 and ground-truth image 402.

An image 901 is inferred from previous estimate model 413 and is scaled up to image 902 which is of the same size as ground-truth image 402. Alternatively, as discussed with respect to step 801, scaled-up image 902 may be inferred directly from previous estimate model 413. Scaled-up image 902 is compared with image 402 using any suitable image comparison technique. The difference between the two images is residual image 903. A new neural network of the same type as previously used is trained on residual image 903 to create residual estimate 904, which is combined with previous estimate model 413 to create first refined estimate model 905. This combination involves running the two models consecutively, so that the pixel and colour information output from estimate model 413 is used as input to residual model 904.

Residual estimate 904 is trained on the entire residual image 903, rather than on tiles of this image as was done when training the first estimate model. This is possible because residual image 903 is sparse, even in later iterations of the process where a very large ground-truth image may be used. This first refining step has the effect of removing any artefacts created by the tiling process used in the creation of the first estimate model.

Figure 10 details steps carried out by processor 201 at step 803 to obtain a first refined estimate from a previous estimate, implementing the process shown in Figure 9. At step 802 already shown in Figure 8, a scaled-up image is inferred using the previous estimate model, and At step 1001 a residual is calculated between the ground-truth image selected at step 801 and the scaled-up image inferred at step 802. At step 1002 a new neural network, of the same type as previously used, is trained on the residual to obtain a residual model, and at step 1003 the scaled-up estimate is combined with the residual model to obtain a first refined estimate model.

The steps of Figure 10 are also carried out to implement step 507, which is the final refinement of the last estimate model. However, in this case there is no scaling up of the inferred image.

Thus in this embodiment the process of refining an immediately previous estimate INR, such as estimate model 413, is done by training a first residual INR, such as residual model 904, on a comparison of the previous estimate INR and the ground-truth signal; and combining the first residual INR and previous estimate INR.

In other embodiments, other methods of refining an immediately previous estimate INR using a ground-truth image of a larger size could be used.

Also in this embodiment, the step of training a first residual INR, such as residual model 904, comprises using the previous estimate INR, such as estimate model 413, to infer a first inferred signal, such as inferred image 902. The first inferred signal is compared with the ground-truth signal to generate a first residual signal, such as residual image 903, and a neural network is trained on the first residual signal.

In other embodiments, other methods of comparing a previous estimate INR with a ground-truth image to obtain a residual INR could be used. For example, a prediction method could be applied to scaled-up inferred image 902 to obtain a predicted image, and this predicted image would be compared with ground-truth image 402 to obtain the residual image. The combined estimate model 905 would then include instructions to carry out such a prediction when inferring the estimate model, ie create a prediction from the output of model 413 and use the prediction as input to residual model 904. A suitable prediction method could be of the type used in intra-frame coding. The process could run several prediction methods on the scaled-up image, compare all the predicted images with the ground truth image, and select the one that has the smallest residual. This could be done at any or all of the repetitions of step 803, possibly with a different prediction method being used at each.

The process of obtaining the second refined estimate model is illustrated in Figure 11, continuing the example of Figures 4, 6 and 9. Since this illustration is of the first iteration of this process, first refined estimate model 905 is further refined using ground-truth image 402. Ground-truth image 402 is split into tiles as shown, for example tile 1101. These tiles may be of the same pixel size as those used during the generation of the first estimate model, or may be of a different size. The number or size of tiles may be chosen automatically dependent on the size of the input image or another parameter, or may be a user-controlled variable.

An image 1112 inferred from first refined estimate model 904 is split into tiles of the same configuration, such as tile 1102, and corresponding tiles are compared using a suitable comparison algorithm, such as peak signal-to-noise ratio, to identify a difference value for each tile position. If the difference value is over a defined threshold, a residual tile is created showing the differences between the ground-truth tile and the inferred tile. A set of residual tiles created by these comparisons, such as residual tile 1103, is illustrated at 1113, although the process does not actually join them together to make an image. For each residual tile, a new neural network of the same type as previously used is trained on it. For example tile model 1104 is trained on residual tile 1103 which it has a difference value over the defined threshold. The threshold may be automatically determined or may be a user-controlled variable. The threshold may be different on each iteration of this step.

The set of residual tile models is illustrated at 1114, although the process does not actually join them together. Shaded squares represent tile models, and unshaded squares represent tiles that did not require a model creating because the that tile position had a difference value below the defined threshold. Once all the residual tile models 1114 are obtained, they are combined with first refined estimate model 905 to create a second refined estimate model 412, ie the estimate model 412 that is obtained on this iteration of step 505.

Continuing the example of Figures 4, 6, 9 and 11, estimate model 412 will then be refined further on another iteration of step 505. At step 803 it will be compared with ground-truth image 401 to obtain a first refined estimate model, and at step 804 it will be again compared with ground-truth image 401 to obtain a second refined estimate model, which is estimate model 411 obtained on this iteration of step 505. On the final iteration of step 505, this estimate model will be compared with largest ground-truth image 111 to obtain the last estimate model 410.

On each iteration of the second refinement step, artefacts are likely to be created by the tiling process. However, these will be removed by the next iteration of the first refinement step described with reference to Figures 9 and 10. To complete the training process, the last estimate model 410 is refined at step 507 to remove any tiling artefacts and obtain final INR 112.

Figure 12 details steps carried out by processor 201 at step 804 to obtain a second refined estimate, implementing the process shown in Figure 11. At step 1201 an image is inferred from the first refined estimate and divided into a number of tiles, and at step 1202 the ground-truth image is divided into a corresponding number of tiles, of the same size and location. At step 1203 a pair of corresponding tiles is selected, and at step 1204 a difference value is calculated by comparing them. At step 1205 a question is asked as to whether the difference value is within tolerance, i.e. below a defined threshold, and if this question is answered in the negative then at step 1206 a new neural network is trained on the residual tile obtained by comparing the ground-truth tile and the inferred tile. If it is answered in the affirmative then a question is asked at step 1207 as to whether there is another pair of tiles to compare, and if this question is answered in the affirmative then control is returned to step 1203 and the next pair selected. If it is answered in the negative then if any new tile models have been trained they are combined with the first refined estimate model to obtain a second refined estimate model.

Thus in this embodiment the process of using a ground-truth signal, such as ground-truth image 402, to refine a previous estimate INR, such as estimate model 413, further comprises the step of generating a second refined estimate INR, such as second refined estimate model 412. This involves training at least one residual tile INR, such as residual tile model 1104, on a comparison of tiles in the first refined estimate INR, such as first refined estimate model 905, and tiles in the ground-truth signal, such as ground-truth image 402. The at least one residual tile INR is then combined with the first refined estimate INR.

In other embodiments, other methods of further refining an immediately previous estimate INR using a ground-truth image of a larger size could be used. For example, as described with reference to Figure 10, one or more prediction algorithms could be used on each inferred tile to reduce the number and size of the residual tile models.

Also in this embodiment, the step of training a residual tile INR, such as residual tile model 1104, comprises using the first refined estimate INR, such as first refined estimate model 905, to infer a second inferred signal, such as inferred image 1112, that is of the same size as the ground-truth signal. The second inferred signal is split into a plurality of inferred tiles, such as tile 1102. The ground-truth signal is split into the same number of ground-truth tiles, such as tile 1101, each corresponding to an inferred tile of the same size and in the same position. Each inferred tile is compared it with the corresponding ground-truth tile to obtain a residual tile and determine a difference value, and if the difference value is above a predetermined threshold, a neural network is trained on the residual tile.

In other embodiments, other methods of generating residual tile INRs by comparing an estimate model with a ground-truth image could be used.

In this embodiment, a two-step process of refining the immediately previous estimate INR is carried out, obtaining a first and then second estimate model before moving on to the next size ground truth image. In a further embodiment, only one step of refining the immediately previous estimate INR might be carried out. For example, a tiling method could be used that does not create artefacts at the boundaries, or a training method that does not use tiles could be used. The invention herein described is a method of recursively refining an estimate INR by comparing it with a ground truth image and training another INR on the residual. Any suitable method of comparing and training could be used.

Following step 1804 as described with reference to Figure 12, step 505 is complete and the second refined estimate model is considered to be the new estimate model k. This estimate model is further refined, either by another iteration of step 505 if there is a larger ground-truth image that has not yet been used, or by the final refinement step 507.

In this embodiment, the process of refining a final estimate INR, such as estimate model 410, is done in the same way as the first refinement step 803, except that the final estimate INR is compared with the largest ground-truth image rather than a ground-truth image of a larger size.

In other embodiments, a different method of removing the tile artefacts introduced by the last refinement step could be used.

The final trained INR 112 output at step 303 is defined by an ordered list of all the neural networks combined to generate it, plus one or more tile maps, and any other information needed to infer the image such as a prediction method to be used between two individual neural networks.

## Claims

1. A method of training an implicit neural representation (INR) on an input digital data signal, comprising the steps of:
obtaining a set of at least two ground-truth signals derived from the input signal, each ground-truth signal being a different size of the input signal; and
training an estimate INR by:
training an estimate INR on the smallest ground-truth signal in the set, and
for each of a subset of the remaining ground-truth signals in the set, from the smallest to the largest in the subset, recursively refining the immediately previous estimate INR, by:
training a first residual INR on a comparison of the previous estimate INR and the ground-truth signal; and
combining the first residual INR and previous estimate INR.

2. A method according to claim 2, wherein the step of training the first residual INR comprises:
using the previous estimate INR to infer a first inferred signal;
comparing the first inferred signal with the ground-truth signal to generate a first residual signal; and
training a neural network on the first residual signal.

3. A method according to claim 2, further comprising, before the step of comparing the first inferred signal with the ground-truth signal:
resizing the first inferred signal to be the same size as the ground-truth signal.

4. A method according to either of claims 2 or 3, wherein the step of comparing the first inferred signal with the ground truth signal comprises:
creating a predicted signal from the inferred signal by extrapolating pixel values in the inferred signal; and
comparing the predicted signal with the ground-truth signal to generate the first residual signal.

5. A method according to either of claims 2 or 3, wherein the step of refining a previous estimate INR further comprises a step of generating a second refined estimate INR by:
training at least one residual tile INR on a comparison of tiles in the first refined estimate INR and tiles in the ground-truth signal; and
combining the at least one residual tile INR with the first refined estimate INR.

6. A method according to claim 5, wherein the step of training at least one residual tile INR comprises:
using the first refined estimate INR to infer a second inferred signal that is of the same size as the ground-truth signal;
splitting the second inferred signal into a plurality of inferred tiles;
splitting the ground-truth signal into the same number of ground-truth tiles, each corresponding to an inferred tile of the same size and in the same position;
for each inferred tile:
comparing it with the corresponding ground-truth tile to determine a difference value, and
if the difference value is above a predetermined threshold, training a neural network on a residual tile obtained by comparing the two tiles.

7. A method according to any of claims 1 to 6, wherein the last recursive refinement step carried out results in the generation of a final estimate INR, further comprising the step of refining the final estimate INR by:
training a second residual INR on a comparison of the final estimate INR and the largest ground-truth signal; and
combining the second residual INR and final estimate INR.

8. A method according to claim 7, wherein the step of training a second residual INR comprises:
using the final estimate INR to infer a third inferred signal;
comparing the third inferred signal with the largest ground-truth signal to generate a second residual signal; and
training a neural network on the second residual signal.

9. A method according to any of claims 1 to 8, wherein the step of training an estimate INR using the smallest ground-truth signal comprises:
splitting the smallest ground-truth signal into a plurality of tiles;
training a plurality of tile INRs, one from each of the plurality of tiles; and
combining the plurality of tile INRs.

10. A method according to any of claims 1 to 9, wherein the input data signal is one of:
a two-dimensional image;
a three-dimensional shape;
a video recording; and
an audio recording.

11. A method according to any of claims 1 to 10, wherein said step of obtaining the set of ground-truth signals comprises recursively downscaling the input signal.

12. A method according to any of claims 1 to 11, wherein the set of ground-truth signals includes the input signal.

13. Data processing apparatus comprising a processor and a memory storing instructions that, when executed by the processor, cause the processor to perform the method of any of claims 1 to 12.

14. A computer program comprising instructions which, when the program is executed by a computer, cause the computer to carry out the method of any of claims 1 to 12.

15. A computer-readable storage medium having stored thereon the computer program of claim 14.
